(19) Europäisches Patentamt
European Patent Office
Office européen des brevets

(11) **EP 4 180 150 A1**

(12) **EUROPEAN PATENT APPLICATION**

(43) Date of publication:
**17.05.2023 Bulletin 2023/20**

(21) Application number: **21208316.6**

(22) Date of filing: **15.11.2021**

(51) International Patent Classification (IPC):
**B22F 3/20** (2006.01)    **B22F 10/18** (2021.01)
**B22F 10/31** (2021.01)    **B29C 64/118** (2017.01)
**B29C 64/393** (2017.01)    **B33Y 10/00** (2015.01)
**B33Y 50/02** (2015.01)

(52) Cooperative Patent Classification (CPC):
(C-Sets available)
**B22F 10/31; B22F 10/18; B29C 64/118;**
**B29C 64/393; B33Y 10/00; B33Y 50/02;**
B22F 2999/00      (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Markforged, Inc.**
**Watertown, MA 02472 (US)**

(72) Inventor: **LAWRENCE, David**
**Watertown, MA 02472 (US)**

(74) Representative: **Kilner, Matthew Simon et al**
**Kilburn & Strode LLP**
**Lacon London**
**84 Theobalds Road**
**London WC1X 8NL (GB)**

(54) **APPARATUS AND METHOD FOR EXTRUSION COMPENSATION IN 3D PRINTING**

(57)      A 3D production apparatus and method that receives a 3D production file containing an extrusion control command for controlling an extruder mechanism. A corrected extrusion control command is generated based on the extrusion control command and a correction formula. The extruder mechanism is controlled in accordance with the corrected extrusion control command.

*FIG. 1A*

(52) Cooperative Patent Classification (CPC): (Cont.)

C-Sets
B22F 2999/00, B22F 10/30, B22F 12/53

**Description**

FIELD OF THE INVENTION

The invention relates to an apparatus and method for correcting for deviation errors when performing extrusion of printing material during 3D printing.

BACKGROUND OF THE INVENTION

A 3D printing system may include a print head assembly that moves along the X-Y direction. The print head assembly may include a nozzle for extruding 3D printing material (which can include, for example, in certain 3D printing environments, a filament or fiber) for creating a 3D-printed part.

The 3D printing system may also include an extruder assembly for moving the 3D print material from a source (*e.g.*, spool) to a part being printed. The extruder assembly may include an extruder mechanism or an urging mechanism (*e.g.*, motor and/or pump) to urge the 3D printing material through the nozzle.

In conventional 3D printing, deviation errors may arise between the commanded extrusion rate and the actual rate at the nozzle. These deviation errors often increase at higher extrusion rates. As ever-increasing print speeds are desirable in 3D printing systems (which generally require an increase in extrusion rate), the presence of deviation errors may be limiting.

Therefore, a need in the art exists to control an extruder to compensate for extrusion position deviation errors.

SUMMARY OF THE INVENTION

One aspect of the present invention relates to an apparatus comprising at least one processor, and at least one memory, wherein the at least one memory stores computer-readable instructions which, when executed by the at least one processor, cause the processor to: receive a 3D production file, the 3D production file containing an extrusion control command for controlling an extruder mechanism, generate a corrected extrusion control command, based on the extrusion control command and a correction formula, and control the extruder mechanism in accordance with the corrected extrusion control command.

Another aspect of the present invention relates to a method comprising: receiving, by at least one processor, a 3D production file, the 3D production file containing an extrusion control command for controlling an extruder mechanism; generating, by the at least one processor, a corrected extrusion control command, based on the extrusion control command and a correction formula; and controlling, by the at least one processor, the extruder mechanism in accordance with the corrected extrusion control command.

These and other aspects of the invention will become apparent from the following disclosure.

BRIEF DESCRIPTION OF THE DRAWINGS

Figs. 1A and 1B illustrate an apparatus, in accordance with one embodiment.
Figs. 2(a)-2(b) are plots illustrating correction of extrusion deviation errors, in accordance with one embodiment.
Figs. 3(a)-3(b) are plots illustrating correction of extrusion deviation errors, in accordance with one embodiment.
Fig. 4 is a flow chart for performing 3D-printing of an object with correction for deviation errors, in accordance with one embodiment.

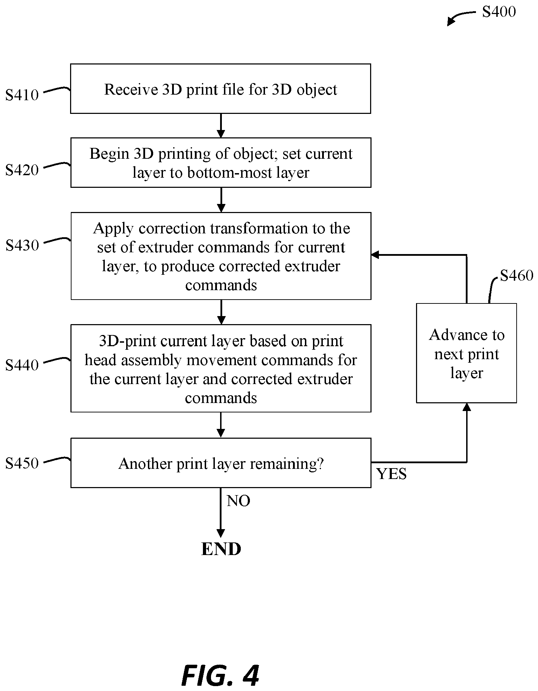

Fig. 4 is a flow chart for performing 3D-printing of an object with correction for deviation errors, in accordance with one embodiment.

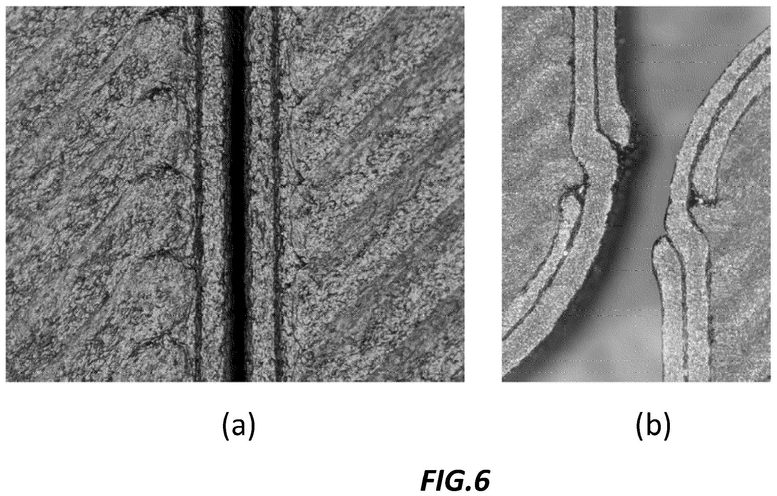

Figs. 6(a) and 6(b) are illustrations of 3D-printed parts, where Fig. 6(a) illustrates 3D-printing with applied extrusion compensation on the right side compared to without extrusion compensation on the left side, and Fig. 6(b) likewise illustrate 3D-printing with applied extrusion compensation on the right side compared to without extrusion compensation on the left side.

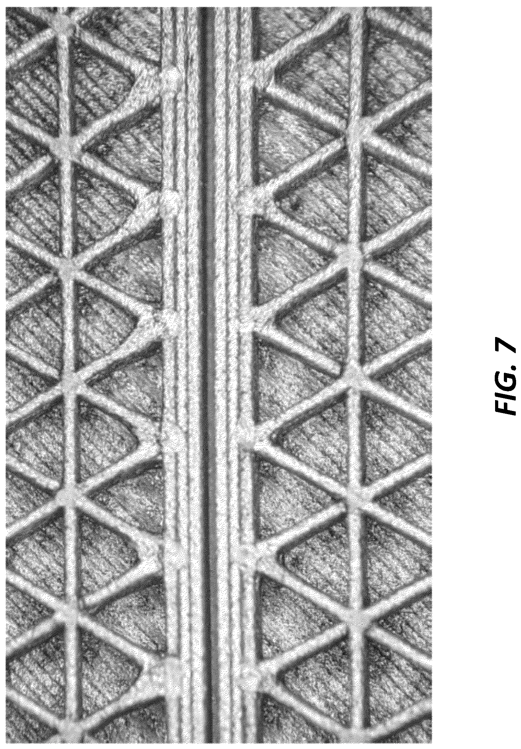

Fig. 7 is an illustration of a 3D-printed part with applied extrusion compensation on the bottom side compared to without extrusion compensation on the top side.

DETAILED DESCRIPTION OF THE PREFERRED EMBODIMENTS

One aspect of the invention relates to compensating for deviation errors between commanded extrusion and actual extrusion of 3D printing material. For convenience, the features of the invention will be described with reference to a fiber or filament as the 3D printing material, but it will be appreciated that other forms of 3D printing material are likewise applicable to the present invention.

A 3D printing apparatus may control the extrusion of the filament (e.g., unwound from a filament spool) using an extrusion mechanism. The inventor of the application discovered that multiple factors may contribute to deviation errors between the driving or urging of filament by the extrusion mechanism and actual extrusion of the filament from the nozzle at the print head assembly:

(1) *Mechanical compliance:* Mechanical compliance (*e.g.,* flex or play) in the print head assembly may contribute to deviation errors, for example, resulting in a rapid change in extrusion rate. For example, mechanical compliance in the print head assembly may be caused by one or more of stepper motor deflection under torque, Bowden tube stretch, compliance in the coupling between the Bowden tube and the print head assembly, and compliance in the 3D printing material itself. That is, the deflection of the 3D printing system may be a non-zero amount.

(2) *Non-instantaneous transitions:* Non-instantaneous movement transitions of the print head assembly from a first velocity (*e.g.,* standstill) to a target velocity, and/or non-instantaneous transitions of extrusion rates, may contribute to deviation errors. In a conventional 3D printing system, the activation of the extrusion mechanism to provide filament extrusion pressure may be timed to coincide with the print head assembly X-Y movement. However, deviation errors may arise as, for instance, the commanding of the extrusion mechanism does not result in actual instantaneous filament extrusion from the nozzle.

As such, one aspect of the present invention relates to controlling the extruder mechanism of a 3D printing apparatus to compensate for deviation errors. Such control of the extruder mechanism may include the adjustment of extrusion pressure during a transition to target extrusion rate, in coordination with print head assembly movement. For instance, the control may include increasing the extrusion pressure exactly, continuously, and/or smoothly during transitions in movement speed of the print head assembly.

In yet another aspect of the present invention, the controlling of the extruder mechanism may include a determination (*e.g.,* calculation) an extrusion compensation transformation profile. In one aspect, the transformation profile may include, as an input, the commanded extruder position (e.g., based on a 3D print file), and may include, as an output, the actual extruded position (*e.g.,* subject to deviations caused by one or more of the above-referenced factors). Such compensation may allow the system to increase the speed of 3D formation at areas that otherwise would require a lower speed, such as during transitions from a very high rate of speed to a slower rate and when the print head assembly otherwise must slow to produce corners and "V"-shapes. For instance, the transformation profile may be based on a constructed model of the difference between a commanded extrusion point (based on an extrusion command) and the actual extruded position.

In one aspect of the present invention, the transformation profile may be modeled as a first-order linear system. In one aspect of the present invention, the controlling of the extruder mechanism may include applying an inverse system to the first-order linear system to a set of extruder commands (*e.g.,* from the 3D print file), to produce a compensated set of extruder command that compensates for deviation errors.

*3D Printer Apparatus*

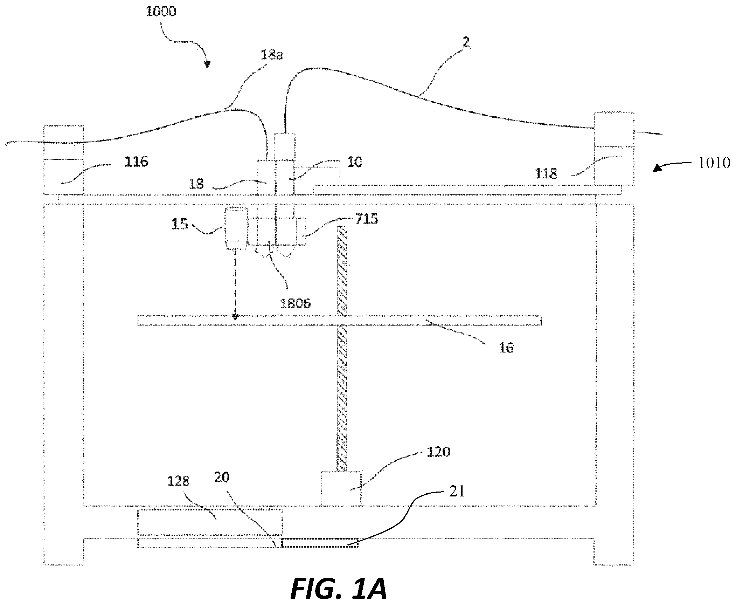

Figs. 1A-1B illustrate an apparatus 1000 in accordance with one embodiment of the invention. The apparatus 1000 includes one or more controllers 20, one or more memories 21, and one or more print heads 10, 18. For instance, one head 10 may deposit a metal or fiber reinforced composite filament 2, and another head 18 may apply pure or neat matrix resin 18a (thermoplastic or curing). In the case of the filament 2 being a fiber reinforced composite filament, such filament (also referred to herein as continuous core reinforced filament) may be substantially void free and include a polymer or resin that coats, permeates or impregnates an internal continuous single core or multistrand core. It should be noted that although the print head 18 is shown as an extrusion print head, "fill material print head" 18 as used herein includes optical or UV curing, heat fusion or sintering, or "polyjet", liquid, colloid, suspension or powder jetting devices (not shown) for depositing fill material. It will also be appreciated that a material bead formed by the filament 10a may be deposited as extruded thermoplastic or metal, deposited as continuous or semi-continuous fiber, solidified as photo or UV cured resin, or jetted as metal or binders mixed with plastics or metal, or are structural, functional or coatings. The fiber reinforced composite filament 2 (also referred to herein as continuous core reinforced filament) may be a push-pulpreg that is substantially void free and includes a polymer or resin 4 that coats or impregnates an internal continuous single core or multistrand core 6. The apparatus includes heaters 715, 1806 to heat the print heads 10, 18, respectively so as to facilitate deposition of layers of material to form the object 14 to be printed. A cutter 8 controlled by the controller 20 may cut the filament 2 during the deposition process in order to (i) form separate features and components on the structure as well as (ii) control the directionality or anisotropy of the deposited material and/or bonded ranks in multiple sections and layers. As depicted, the cutter 8 is a cutting blade associated with a backing plate 12 located at the nozzlet outlet. Other cutters include laser, high-pressure air or fluid, or shears. The apparatus 1000 may also include additional non-printing tool heads, such as for milling, SLS, etc.

The apparatus 1000 includes a gantry 1010 that supports the print heads 10, 18. The gantry 1010 includes motors 116, 118 to move the print heads 10, 18 along X and Y rails in the X and Y directions, respectively. The apparatus 1000 also includes a build platen 16 (e.g., print bed) on which an object to be printed is formed. The height of the build platen 16 is controlled by a motor 120 for Z direction adjustment. Although the movement of the apparatus has been described based on a Cartesian arrangement for relatively moving the print heads in three orthogonal translation directions, other arrangements are considered within the scope of, and expressly described by, a drive system or drive or motorized drive that may relatively move a print head and a build plate supporting a 3D printed object in at least three degrees of freedom (*i.e.*, in four or more degrees of freedom as well). For example, for three degrees of freedom, a delta, parallel robot structure may use three parallelogram arms connected to universal joints at the base, optionally to maintain an orientation of the print head (e.g., three motorized degrees of freedom among the print head and build plate) or to change the orientation of the print head (e.g., four or higher degrees of freedom among the print head and build plate). As another example, the print head may be mounted on a robotic arm having three, four, five, six, or higher degrees of freedom; and/or the build platform may rotate, translate in three dimensions, or be spun.

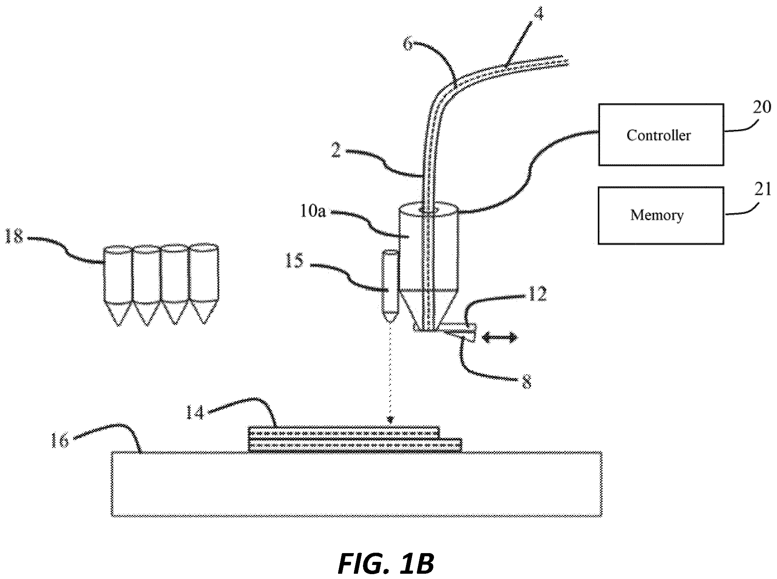

Fig. 1B depicts an embodiment of the apparatus 1000 applying the filament 2 to build a structure. In one embodiment, the filament 2 is a metal filament for printing a metal object. In one embodiment, the filament 2 is a fiber reinforced composite filament (also referred to herein as continuous core reinforced filament) may be a push-pulpreg that is substantially void free and includes a polymer or resin 4 that coats or impregnates an internal continuous single core or multistrand core 6.

The filament 2 is fed through a nozzlet 10a disposed at the end of the print head 10, and heated to extrude the filament material for printing. In the case that the filament 2 is a fiber reinforced composite filament, the filament 2 is heated to a controlled push-pultrusion temperature selected for the matrix material to maintain a predetermined viscosity, and/or a predetermined amount force of adhesion of bonded ranks, and/or a surface finish. The push-pultrusion may be greater than the melting temperature of the polymer 4, less than a decomposition temperature of the polymer 4 and less than either the melting or decomposition temperature of the core 6.

After being heated in the nozzlet 10a and having its material substantially melted, the filament 2 is applied onto the build platen 16 to build successive layers 14 to form a three dimensional structure. One or both of (i) the position and orientation of the build platen 16 or (ii) the position and orientation of the nozzlet 10 are controlled by a controller 20 to deposit the filament 2 in the desired location and direction. Position and orientation control mechanisms include gantry systems, robotic arms, and/or H frames, any of these equipped with position and/or displacement sensors to the controller 20 to monitor the relative position or velocity of nozzlet 10a relative to the build platen 16 and/or the layers 14 of the object being constructed. The controller 20 may use sensed X, Y, and/or Z positions and/or displacement or velocity vectors to control subsequent movements of the nozzlet 10a or platen 16. The apparatus 1000 may optionally include a laser scanner 15 to measure distance to the platen 16 or the layer 14, displacement transducers in any of three translation and/or three rotation axes, distance integrators, and/or accelerometers detecting a position or movement of the nozzlet 10a to the build platen 16. The laser scanner 15 may scan the section ahead of the nozzlet 10a in order to correct the Z height of the nozzlet 10a, or the fill volume required, to match a desired deposition profile. This measurement may also be used to fill in voids detected in the object. The laser scanner 15 may also measure the object after the filament is applied to confirm the depth and position of the deposited bonded ranks. Distance from a lip of the deposition head to the previous layer or build platen, or the height of a bonded rank may be confirmed using an appropriate sensor.

Various 3D-printing aspects of the apparatus 1000 are described in detail in U.S. Patent Application Publication No. 2019/0009472, which is incorporated by reference herein in its entirety.

One or more of the print heads 10, 18 may each include an extrusion mechanism for controllably extruding the respective 3D printing material out of the respective nozzlet. That is, the print head 10 may include an extrusion mechanism for controllably extruding the filament 2 from the nozzlet 10a. The print head 18 may include an extrusion mechanism for controllably extruding the pure or neat matrix resin 18a (e.g., out of an analogous nozzlet). In a case where the apparatus 1000 includes multiple print heads 18, each of the print heads 18 may include its own extrusion mechanism.

In one embodiment, the extruder mechanism pulls the filament off the spool and pushes the filament onto the build platen and/or 3D part being printed.

In one embodiment, one, more than one, or all of the extruder mechanisms includes an idler wheel, a drive wheel, and a motor that drives the drive wheel. The drive wheel and the idler wheel oppose each other. The idler wheel urges the filament towards the drive wheel, such that teeth on the drive wheel grip the filament. The drive wheel pulls respective feedstock filament off a spool, and drives the filament through the corresponding nozzlet for extrusion. The nozzlet presses and irons the filament to form a tack of the filament to the 3D part being printed.

The drive wheel may be coupled to the motor shaft of the motor via a one-way clutch. The one-way clutch allows the drive wheel to advance the filament at a rate greater than that of the motor shaft driving the drive wheel, as the filament may be pulled by the ironing operation of the nozzlet, which produces tension between the nozzlet and the filament spool and causes filament advancement at a faster rate than the rate at which the motor drives the drive wheel to push the fiber.

As the extruder mechanism is advancing the filament, the print head moves in an X-Y direction based on the controller 20 controlling the motors 116, 118. When the 3D printing system has completed extrusion for a section of filament, the controller 20 controls the cutter 8 to cut the filament, and the remaining filament is ironed into the 3D part.

In one embodiment, one, more than one, or all of the extruder mechanisms are mounted on the print head assembly, and are carried by the print head assembly as the print head assembly moves. In one embodiment, one, more than one, or all of the extruder mechanisms are mounted on a frame of the apparatus 1000, and do not move with movement of the print head assembly. In such a configuration, the apparatus 1000 may include one or more Bowden tubes, each guiding a respective filament between the respective extruder mechanism and print head.

*Correction of Extrusion Deviation Errors*

The inventor discovered that when initiating extrusion, an application of a certain amount of positive extruder pressure may be required (*e.g.*, provided by "priming" the extruder) before the filament begins extruding from the nozzle at the desired extrusion rate. Conversely, when terminating extrusion, a negative filament motion may be desired to prevent continued extrusion of the filament. In such circumstances, reduction of extruder pressure from a positive pressure to a zero relative extruder pressure (e.g., provided by "retracting" the extruder to net-zero extruder pressure) for a certain period may be required before the filament stops extruding from the nozzle.

Additional deviation errors may also arise in the case of "impulse" (*i.e.,* nearly instantaneous) prime and retract operations, such as when the start/stop of X-Y motion of the print head assembly is not instant and requires acceleration/deceleration. Additionally, the deviation errors caused by the above-referenced factors (and/or other factors) may be proportional to the magnitude of velocity and/or acceleration of the print head assembly. That is, the greater the velocity and/or acceleration, the greater the magnitude of deviation error.

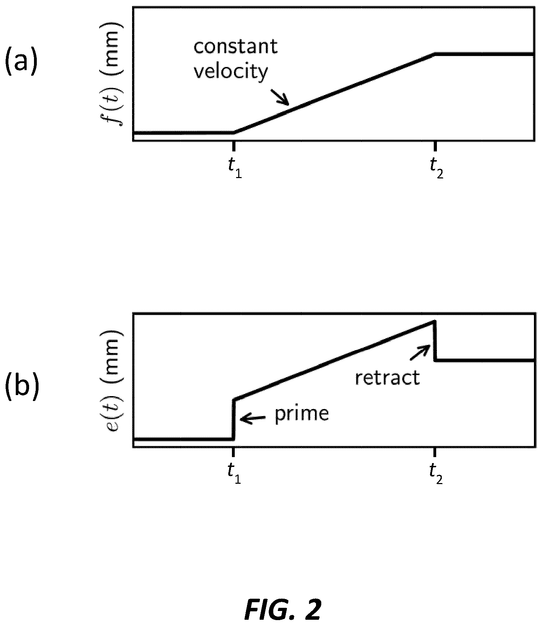

Figs. 2(a)-2(b) illustrate correction of extrusion control in accordance with one aspect of the present invention. Fig. 2(a) is a plot of desired extruded filament position $f(t)$ as a function of time, for an operation to extrude a length of filament. In this operation, the filament position $f(t)$ advances continuously at a constant extrusion rate (*i.e.,* constant velocity) from the time $t_1$ that filament extrusion begins and the time $t_2$ that filament extrusion ends.

Fig. 2(b) is a plot of the commanded filament position $e(t)$ for producing the desired filament position of Fig. 2(a), having applied a correction for extrusion deviation errors in accordance with an aspect of the present invention. As shown in Fig. 2(b), the commanded filament position $e(t)$ includes a command to continuously advance the filament between time $t_1$ and time $t_2$. The commanded filament position $e(t)$ also includes a priming operation at time $t_1$, when filament extrusion is desired to commence. This priming operation compensates for mechanical compliance (*e.g.*, stretch in the Bowden tube and/or stepper motor deflection under torque) that otherwise causes a lag (and therefore a deviation error) between an extrusion command and actual filament extrusion.

The priming operation advances the filament such that actual filament extrusion from the print head assembly occurs immediately following the priming operation as an extrusion command for advancing the filament continues to be applied. The optimal amount of filament advancement for the priming operation may be determined by experimentation, testing, and/or simulations. The optimal amount of filament advancement for the priming operation may be dependent on the extrusion rate, according to a linear relationship. The optimal length of filament to be advanced for the priming operation may be defined as:

$$\text{filament length for priming operation} = K \cdot \text{extrusion rate,}$$

where K is a time constant corresponding to the amount of time to operate the extruder mechanism. For example, if a filament prime length of 0.2 mm is determined to be optimal for an extrusion rate of 60 mm/min (*i.e.,* 1 mm/s), the resulting constant $K$ is 0.2 seconds. The optimal filament prime lengths for other extrusion rates may then be determined based on the constant $K$. For instance, for an extrusion rate of 30 mm/min, the optimal filament prime length for the priming operation is determined to be 0.1 mm

In addition to the priming operation, the commanded extruder trajectory $e(t)$ may further include a retraction operation at time $t_2$, when filament extrusion is desired to terminate. The retraction operation retracts the filament, ensuring that no further extrusion of filament occurs. In one embodiment, the amount of filament retraction during the retraction operation may be equal to the amount of filament advancement during the priming operation. In one embodiment, the amount of filament retraction during the retraction operation may be different from (*e.g.*, less than) to the amount of filament advancement during the priming operation.

The relationship between the desired extruded filament position $f(t)$ and the corrected commanded filament position *e(t)* may be defined as:

$$f(t) = e(t) - \text{deviation error.}$$

The deviation error may also be referred to as "system deflection." More precisely, the relationship between *f(t)* and *e(t)* may be modeled as a first-order system, and such relationship may be defined as:

$$e(t) = f(t) + K \cdot f'(t),$$

where *f'(t)* is the time derivative of the filament position *f(t)*, and $K \cdot f'(t)$ represents the magnitude of deviation error. As such, the magnitude of deviation error may be proportional to the extrusion rate. For instance, for an operation where filament is to be extruded for 1 second at a 1 mm/s rate:

$$
f(t) = \begin{array}{ll}
0 \text{ mm} & (\text{for } t < 0 \text{ s}) \\
t \cdot 1 \text{ mm/s} & (\text{for } 0 \text{ s} < t < 1 \text{ s}) \\
1 \text{ mm} & (\text{for } t > 1 \text{ s}),
\end{array}
$$

the corresponding corrected commanded extruder position *e(t)* (assuming *K* = 0.2 s) is:

$$
\begin{aligned}
e(t) = \ & f(t) + 0.2 \text{ s} \cdot f'(t) \\
= \ & \begin{array}{ll}
0 \text{ mm} & (\text{for } t < 0 \text{ s}) \\
0.2 \text{ mm} + t \cdot 1 \text{ mm/s} & (\text{for } 0 \text{ s} < t < 1 \text{ s}) \\
1 \text{ mm} & (\text{for } t > 1 \text{ s}).
\end{array}
\end{aligned}
$$

In effect, *e'(t)* is equal to *f'(t)*, except for a forward 0.2 mm impulse at *t* = 0 s (the priming operation) and a reverse 0.2 mm impulse at t = 1 s (the retracting operation).

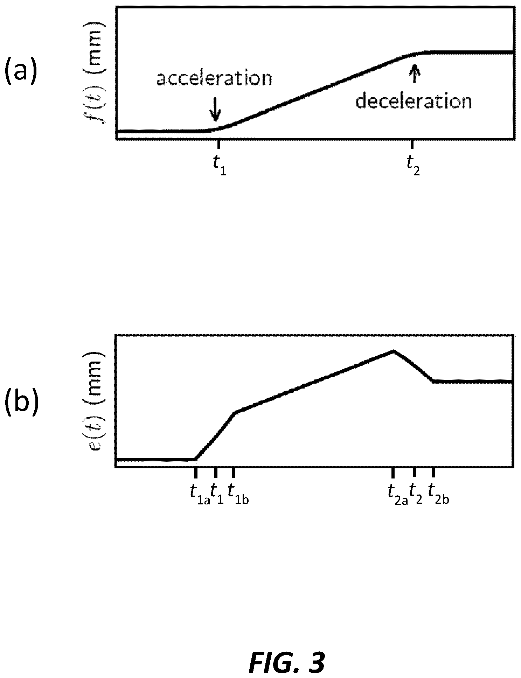

Figs. 3(a)-3(b) illustrate correction of extrusion control in accordance with another aspect of the present invention. This correction not only accounts for priming and retracting as described with reference to Figs. 2(a)-2(b), but also provides additional correction to compensate for non-instantaneous acceleration and deceleration of extrusion. The inventor recognized that the transition from a zero extrusion rate to a desired extrusion rate is not instantaneous-in reality, the extrusion involves acceleration from zero to the desired extrusion rate. When extrusion is synchronized with concurrent X-Y motion of the print head assembly, the required acceleration/deceleration period may cause over-extrusion at the beginning and/or end of the extrusion operation. To prevent such over-extrusion, this embodiment provides further correction by controlling the acceleration and deceleration of extrusion. In one aspect, the magnitude of such acceleration and deceleration depends on the X-Y motion being applied to the print head assembly. For instance, the desired filament extrusion may be directly derived from the X-Y motion trajectory of the print head assembly, after which the compensated extrusion rate is determined based on the desired filament extrusion. It is noted that this approach is mathematically equivalent to deriving the extruder compensation directly from the X-Y motion.

Fig. 3(a) is a plot of desired extruded filament position *f(t)* as a function of time, for an operation to extrude a length of filament, which accounts for acceleration and deceleration of extrusion between zero and the target extrusion rate. While the filament position *f(t)* advances at a target extrusion rate during the primary portion of the extrusion operation, the desired filament position *f(t)* also includes an acceleration ramp-up period in the vicinity of time $t_1$ (when filament extrusion is desired to commence) and a deceleration ramp-down period in the vicinity of time $t_2$ (when filament extrusion is desired to terminate).

Fig. 3(b) is a plot of the commanded filament position *e(t)* for producing the desired filament position of Fig. 3(a), including correction for extrusion deviation errors in accordance with an aspect of the present invention. As shown in Fig. 3(b), the commanded filament position *e(t)* includes an acceleration operation, during a period between time $t_{1a}$ and time $t_{1b}$, where filament extrusion accelerates from zero to the target extrusion rate. The commanded filament position *e(t)* also includes a deceleration operation, during a period between time $t_{2a}$ and time $t_{2b}$, where filament extrusion decelerates from the target extrusion rate to zero. Between times $t_{1b}$ and $t_{2a}$, filament is extruded at the target extrusion rate.

In one aspect of the present invention, the rates of acceleration and deceleration are constant. That is, extrusion of the filament is controlled with a constant acceleration rate, such that the extrusion rate increases linearly between zero and the target extrusion rate (and similarly for deceleration).

In one aspect of the present invention, the period between time $t_{1a}$ and time $t_{1b}$ and the period between time $t_{2a}$ and time $t_{2b}$ are constant. That is, acceleration of the filament extrusion is controlled, based on the target extrusion rate, such that the extrusion rate successfully increases from zero to the target extrusion rate in a period of $[t_{1b} - t_{1a}]$. The acceleration may be linear or curved.

In one aspect of the present invention, the rates of acceleration and deceleration depend on the X-Y motion being applied to the print head assembly. For instance, the desired filament extrusion may be directly derived from the X-Y motion trajectory of the print head assembly, after which the compensated extrusion rate is determined based on the desired filament extrusion. It is noted that this approach is mathematically equivalent to deriving the extruder compensation directly from the X-Y motion.

Figs. 6(a)-(b) illustrate comparative results of extrusion compensation on 3D-printed parts. Fig. 6(a) illustrates an example layer for a 3D-printed part, where the right side has been printed using extrusion compensation and the left side has been printed without the extrusion compensation. Fig. 6(b) illustrates another example layer for a 3D-printed part, where the right side has been printed using extrusion compensation and the left side has been printed without the extrusion compensation. As shown on these figures, the extrusion compensation results in a uniform fill in the layer, while the lack of extrusion compensation results in globular imperfections.

Fig. 7 illustrates an example layer for a 3D-printed part, where the bottom side has been printed using extrusion compensation and the top side has been printed without the extrusion compensation. As shown on this figure, the extrusion compensation results in a uniform fill in the layer, while the lack of extrusion compensation results in globules of extra material where the triangular applications intersect the edges.

*Methods of 3D Printing With Extrusion Correction*

Fig. 4 illustrates an operation S400 for producing a 3D part, which employs extrusion correction in accordance with one aspect of the present invention.

In step S410, the controller 20 receives a 3D print file relating to a 3D object to be printed. The controller 20 may load the print commands within the 3D print file into memory 21. The print commands may include (i) movement commands for the print head assembly and (ii) extruder commands for controlling the extruder mechanism(s) to extrude filament.

In step S420, the controller 20 initiates the 3D-printing operation of the object, setting the current layer to be printed as the bottom-most print layer.

In step S430, the controller 20 applies a correction transformation to the set of extruder commands for the current layer to be printed. The application of the correction transformation produces a set of corrected extruder commands. In one embodiment, the deviation error between the original extruder commands and actual extrusion may be modeled based on a first-order system $(e(t) \rightarrow f(t))$, and the correction transformation may be performed by applying the inverse of the first-order system $(f(t) \rightarrow e(t))$. It will be appreciated that instead of the controller 20 performing the correction transformation, the apparatus may alternatively provide the extruder commands to a separate system (e.g., transmission over the Internet to a cloud computing platform) to apply the correction transformation, and receive the corrected extruder commands from the separate system (e.g., via the Internet).

In step S440, the controller 20 controls the motors 116, 118 with motor commands, and causes the print head(s) 10, 18 to print the current layer based on the print head assembly movement commands and the corrected extruder commands. It will also be appreciated that steps S430 and S440 may be performed concurrently, such that the process of producing corrected extruder commands is performed in real-time during the printing of the current layer.

In step S450, the controller 20 determines whether another print layer remains to be printed for the object. If another print layer remains to be printed, the operation proceeds to step S460. If the current print layer is the final print layer, the operation ends.

In step S460, the controller 20 increments the current print layer to the next layer, thereby advancing to the next layer. Generally, the next layer is the successive layer upwards in height. The operation then returns to step S430.

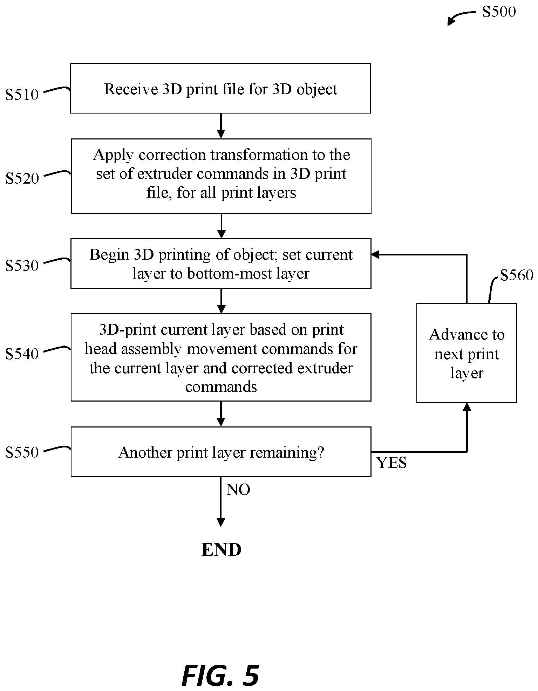

Fig. 5 illustrates an operation S500 for producing a 3D part, which employs extrusion correction in accordance with one aspect of the present invention.

In step S510, the controller 20 receives a 3D print file relating to a 3D object to be printed. The controller 20 may load the print commands within the 3D print file into memory 21. The print commands may include (i) movement commands for the print head assembly and (ii) extruder commands for controlling the extruder mechanism(s) to extrude filament.

In step S520, the controller 20 applies a correction transformation to the set of extruder commands in the 3D print file. The application of the correction transformation produces a set of corrected extruder commands. In one embodiment, the deviation error between the original extruder commands and actual extrusion may be modeled based on a first-order system, and the correction transformation may be performed by applying the inverse of the first-order system.

It will be appreciated that instead of the controller 20 performing the correction transformation, the apparatus may alternatively provide the extruder commands to a separate system (*e.g.,* transmission over the Internet to a cloud computing platform) to apply the correction transformation, and receive the corrected extruder commands from the separate system (*e.g.*, via the Internet).

In step S530, the controller 20 initiates the 3D-printing operation of the object, setting the current layer to be printed as the bottom-most print layer.

In step S540, the controller 20 controls the motors 116, 118 with motor commands, and causes the print head(s) 10, 18 to print the current layer based on the print head assembly movement commands and the corrected extruder commands.

In step S550, the controller 20 determines whether another print layer remains to be printed for the object. If another print layer remains to be printed, the operation proceeds to step S560. If the current print layer is the final print layer, the operation ends.

In step S560, the controller 20 increments the current print layer to the next layer, thereby advancing to the next layer. Generally, the next layer is the successive layer upwards in height. The operation then returns to step S530.

Incorporation by reference is hereby made to U.S. Patent No. 10,076,876, U.S. Patent No. 9,149,988, U.S. Patent No. 9,579,851, U.S. Patent No. 9,694,544, U.S. Patent No. 9,370,896, U.S. Patent No. 9,539,762, U.S. Patent No. 9,186,846, U.S. Patent No. 10,000,011, U.S. Patent No. 10,464,131, U.S. Patent No. 9,186,848, U.S. Patent No. 9,688,028, U.S. Patent No. 9,815,268, U.S. Patent No. 10,800,108, U.S. Patent No. 10,814,558, U.S. Patent No. 10,828,698, U.S. Patent No. 10,953,609, U.S. Patent Application Publication No. 2016/0107379, U.S. Patent Application Publication No. 2019/0009472, U.S. Patent Application Publication No. 2020/0114422, U.S. Patent Application Publication No. 2020/0361155, U.S. Patent Application Publication No. 2020/0371509, and U.S. Provisional Patent Application No. 63/138,987 in their entireties.

Although this invention has been described with respect to certain specific exemplary embodiments, many additional modifications and variations will be apparent to those skilled in the art in light of this disclosure. For instance, while reference has been made to an X-Y Cartesian coordinate system, it will be appreciated that the aspects of the invention may be applicable to other coordinate system types (e.g., radial). It is, therefore, to be understood that this invention may be practiced otherwise than as specifically described. Thus, the exemplary embodiments of the invention should be considered in all respects to be illustrative and not restrictive, and the scope of the invention to be determined by any claims supportable by this application and the equivalents thereof, rather than by the foregoing description.

The following clauses define various aspects and optional features of the disclosure:

Clause 1: An apparatus comprising: at least one processor; and at least one memory, wherein the at least one memory stores computer-readable instructions which, when executed by the at least one processor, cause the processor to: receive a 3D production file, the 3D production file containing an extrusion control command for controlling an extruder mechanism, generate a corrected extrusion control command, based on the extrusion control command and a correction formula, and control the extruder mechanism in accordance with the corrected extrusion control command.

Clause 2: The apparatus of clause 1, wherein the correction formula is a formula between a desired extrusion pattern and a commanded extrusion pattern.

Clause 3: The apparatus of clause 2, wherein the correction formula is a first-order formula.

Clause 4: The apparatus according to any preceding clause, wherein the 3D production file contains multiple extrusion control commands, and wherein the computer-readable instructions, when executed by the at least one processor, cause the processor to generate multiple corrected extrusion control commands corresponding to the multiple extrusion control commands.

Clause 5: The apparatus of clause 4, wherein the generation of the multiple corrected extrusion control commands is performed prior to 3D printing of a 3D part corresponding to the 3D production file.

Clause 6: The apparatus of clause 4, wherein the generation of each corrected extrusion control command is performed during 3D printing of a 3D part corresponding to the 3D production file.

Clause 7: The apparatus of clause 6, wherein the generation of the multiple corrected extrusion control commands is performed on a layer-by-layer basis, according to the layer that corresponds to the respective extrusion control command.

Clause 8: The apparatus according to one of clause 6 or clause 7, wherein the generation of the multiple corrected extrusion control commands is performed in substantially real-time during the 3D printing of the 3D part.

Clause 9: The apparatus according to any preceding clause, wherein the corrected extrusion control command includes a priming operation that controls the extruder mechanism to advance 3D printing material.

Clause 10: The apparatus according to any preceding clause, wherein the corrected extrusion control command includes a retracting operation that controls the extruder mechanism to retract 3D printing material.

Clause 11: The apparatus according to any preceding clause, wherein the corrected extrusion control command includes an acceleration operation that controls the extruder mechanism to advance 3D printing material at a defined rate of acceleration.

Clause 12: The apparatus according to any preceding clause, wherein the corrected extrusion control command includes a deceleration operation that controls the extruder mechanism to stop advancing 3D printing material at a defined rate of deceleration.

Clause 13: A method comprising: receiving, by at least one processor, a 3D production file, the 3D production file containing an extrusion control command for controlling an extruder mechanism; generating, by the at least one processor, a corrected extrusion control command, based on the extrusion control command and a correction formula; and controlling, by the at least one processor, the extruder mechanism in accordance with the corrected extrusion control command.

Clause 14: The method of clause 13, wherein the correction formula is a formula between a desired extrusion pattern and a commanded extrusion pattern.

Clause 15: The method of clause 14, wherein the correction formula is a first-order formula.

Clause 16: The method according to any one of clauses 13 to 15, wherein the 3D production file contains multiple extrusion control commands, and wherein the method further comprises generating multiple corrected extrusion control commands corresponding to the multiple extrusion control commands.

Clause 17: The method of clause 16, wherein the generation of the multiple corrected extrusion control commands is performed prior to 3D printing of a 3D part corresponding to the 3D production file.

Clause 18: The method of clause 16, wherein the generation of each corrected extrusion control command is performed during 3D printing of a 3D part corresponding to the 3D production file.

Clause 19: The method of clause 18, wherein the generation of the multiple corrected extrusion control commands is performed on a layer-by-layer basis, according to the layer that corresponds to the respective extrusion control command.

Clause 20: The method according to clause 18 or clause 19, wherein the generation of the multiple corrected extrusion control commands is performed in substantially real-time during the 3D printing of the 3D part.

Clause 21: The method of clause 13, wherein the corrected extrusion control command includes a priming operation that controls the extruder mechanism to advance 3D printing material.

Clause 22: The method according to any of clauses 13 to 21, wherein the corrected extrusion control command includes a retracting operation that controls the extruder mechanism to retract 3D printing material.

Clause 23: The method according to any of clauses 13 to 22, wherein the corrected extrusion control command includes an acceleration operation that controls the extruder mechanism to advance 3D printing material at a defined rate of acceleration.

Clause 24: The method according to any of clauses 13 to 23, wherein the corrected extrusion control command includes a deceleration operation that controls the extruder mechanism to stop advancing 3D printing material at a defined rate of deceleration.

**Claims**

1. An apparatus comprising:

    at least one processor; and
    at least one memory,
    wherein the at least one memory stores computer-readable instructions which, when executed by the at least one processor, cause the processor to:

        receive a 3D production file, the 3D production file containing an extrusion control command for controlling an extruder mechanism,
        generate a corrected extrusion control command, based on the extrusion control command and a correction formula, and
        control the extruder mechanism in accordance with the corrected extrusion control command.

2. The apparatus of claim 1, wherein the correction formula is a formula between a desired extrusion pattern and a commanded extrusion pattern, and wherein preferably the correction formula is a first-order formula.

3. The apparatus according to any preceding claim, wherein the 3D production file contains multiple extrusion control commands, and
    wherein the computer-readable instructions, when executed by the at least one processor, cause the processor to generate multiple corrected extrusion control commands corresponding to the multiple extrusion control commands.

4. The apparatus of claim 3, wherein the generation of the multiple corrected extrusion control commands is performed prior to 3D printing of a 3D part corresponding to the 3D production file.

5. The apparatus of claim 3, wherein the generation of each corrected extrusion control command is performed during 3D printing of a 3D part corresponding to the 3D production file, and
    wherein the generation of the multiple corrected extrusion control commands is preferably performed on a layer-by-layer basis, according to the layer that corresponds to the respective extrusion control command.

6. The apparatus of claim 5, wherein the generation of the multiple corrected extrusion control commands is performed in substantially real-time during the 3D printing of the 3D part.

7. The apparatus according to any preceding claim, wherein the corrected extrusion control command includes one or more of:

    a priming operation that controls the extruder mechanism to advance 3D printing material;
    a retracting operation that controls the extruder mechanism to retract 3D printing material;
    an acceleration operation that controls the extruder mechanism to advance 3D printing material at a defined rate of acceleration; and
    a deceleration operation that controls the extruder mechanism to stop advancing 3D printing material at a defined rate of deceleration.

8. A method comprising:

    receiving, by at least one processor, a 3D production file, the 3D production file containing an extrusion control command for controlling an extruder mechanism;
    generating, by the at least one processor, a corrected extrusion control command, based on the extrusion control command and a correction formula; and
    controlling, by the at least one processor, the extruder mechanism in accordance with the corrected extrusion control command.

9. The method of claim 8, wherein the correction formula is a formula between a desired extrusion pattern and a commanded extrusion pattern, and wherein preferably the correction formula is a first-order formula.

10. The method according to claim 8 or claim 9, wherein the 3D production file contains multiple extrusion control commands, and

wherein the method further comprises generating multiple corrected extrusion control commands corresponding to the multiple extrusion control commands.

11. The method of claim 10, wherein the generation of the multiple corrected extrusion control commands is performed prior to 3D printing of a 3D part corresponding to the 3D production file.

12. The method of claim 10, wherein the generation of each corrected extrusion control command is performed during 3D printing of a 3D part corresponding to the 3D production file.

13. The method of claim 12, wherein the generation of the multiple corrected extrusion control commands is performed on a layer-by-layer basis, according to the layer that corresponds to the respective extrusion control command.

14. The method of claims 12 or 13, wherein the generation of the multiple corrected extrusion control commands is performed in substantially real-time during the 3D printing of the 3D part.

15. The method according to any one of claims 8 to 14, wherein the corrected extrusion control command includes one or more of:

a priming operation that controls the extruder mechanism to advance 3D printing material;
a retracting operation that controls the extruder mechanism to retract 3D printing material;
an acceleration operation that controls the extruder mechanism to advance 3D printing material at a defined rate of acceleration; and
a deceleration operation that controls the extruder mechanism to stop advancing 3D printing material at a defined rate of deceleration.

**FIG. 1A**

*FIG. 1B*

FIG. 2

**FIG. 3**

S400

S410 — Receive 3D print file for 3D object

↓

S420 — Begin 3D printing of object; set current layer to bottom-most layer

↓

S430 — Apply correction transformation to the set of extruder commands for current layer, to produce corrected extruder commands

↓

S440 — 3D-print current layer based on print head assembly movement commands for the current layer and corrected extruder commands

↓

S450 — Another print layer remaining?

YES → S460 — Advance to next print layer → (back to S430)

NO

↓

**END**

*FIG. 4*

S500

S510 — Receive 3D print file for 3D object

S520 — Apply correction transformation to the set of extruder commands in 3D print file, for all print layers

S530 — Begin 3D printing of object; set current layer to bottom-most layer

S560

Advance to next print layer

S540 — 3D-print current layer based on print head assembly movement commands for the current layer and corrected extruder commands

S550 — Another print layer remaining?

YES

NO

**END**

*FIG. 5*

(a)　(b)

FIG.6

*FIG. 7*

Europäisches
Patentamt

European
Patent Office

Office européen
des brevets

# EUROPEAN SEARCH REPORT

**Application Number**

EP 21 20 8316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/093420 A1 (ROBERTS GEORGE JOHN [US] ET AL) 5 April 2018 (2018-04-05) <br> * figures 1-8 * <br> * paragraphs [0038] – [0045], [0070], [0076], [0077] * <br> * claims 1,5,17 * | 1-4, 7-11,15 | INV. <br> B22F3/20 <br> B22F10/18 <br> B22F10/31 <br> B29C64/118 <br> B29C64/393 <br> B33Y10/00 |
| X | WO 2017/086908 A1 (HEWLETT PACKARD DEVELOPMENT CO LP [US]) 26 May 2017 (2017-05-26) <br> * paragraphs [0016], [0021], [0022], [0027], [0040] – [0042] * <br> * claims 1,11,12 * <br> * figures 1-8 * | 1,3-8, 10-15 | B33Y50/02 |
| X | KR 2016 0038942 A (DENTIS CO LTD [KR]) 8 April 2016 (2016-04-08) <br> * claims 1,5 * <br> * figures 1-5 * | 1,3-6,8, 10,12-14 | |
| X | CN 113 246 473 A (SHANGHAI LUNKUO TECH CO LTD) 13 August 2021 (2021-08-13) <br> * paragraphs [0038] – [0045] * <br> * claim 1 * <br> * figures 1-14 * | 1-4,8-11 | **TECHNICAL FIELDS SEARCHED (IPC)** <br><br> B22F <br> C22C <br> B29C <br> B33Y |

-/--

The present search report has been drawn up for all claims

| Place of search | Date of completion of the search | Examiner |
|---|---|---|
| The Hague | 29 April 2022 | Knoflacher, Andreas |

EPO FORM 1503 03.82 (P04C01)

Europäisches
Patentamt

European
Patent Office

Office européen
des brevets

**EUROPEAN SEARCH REPORT**

Application Number

EP 21 20 8316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Tronvoll Sigmund Arntsønn ET AL: "Investigating pressure advance algorithms for filament-based melt extrusion additive manufacturing: theory, practice and simulations", Rapid prototyping journal, 21 August 2019 (2019-08-21), pages 830-839, XP055884612, Bradford DOI: 10.1108/RPJ-10-2018-0275 Retrieved from the Internet: URL:https://ntnuopen.ntnu.no/ntnu-xmlui/bitstream/handle/11250/2629741/10-1108_RPJ-10-2018-0275.pdf?sequence=2 [retrieved on 2022-01-27] * the whole document * | 1-15 | |

-----

TECHNICAL FIELDS
SEARCHED (IPC)

The present search report has been drawn up for all claims

| Place of search | Date of completion of the search | Examiner |
|---|---|---|
| The Hague | 29 April 2022 | Knoflacher, Andreas |

EPO FORM 1503 03.82 (P04C01)

## ANNEX TO THE EUROPEAN SEARCH REPORT
## ON EUROPEAN PATENT APPLICATION NO.

EP 21 20 8316

This annex lists the patent family members relating to the patent documents cited in  the above-mentioned European search report.
The members are as contained in the European Patent Office EDP file on
The European Patent Office is in no way liable for these particulars which are merely given for the purpose of information.

29-04-2022

| Patent document cited in search report | | Publication date | Patent family member(s) | | Publication date |
|---|---|---|---|---|---|
| US 2018093420 | A1 | 05-04-2018 | NONE | | |
| WO 2017086908 | A1 | 26-05-2017 | NONE | | |
| KR 20160038942 | A | 08-04-2016 | NONE | | |
| CN 113246473 | A | 13-08-2021 | CN | 113246473 A | 13-08-2021 |
| | | | US | 11303763 B1 | 12-04-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190009472
- US 10076876 B
- US 9149988 B
- US 9579851 B
- US 9694544 B
- US 9370896 B
- US 9539762 B
- US 9186846 B
- US 10000011 B
- US 10464131 B
- US 9186848 B
- US 9688028 B
- US 9815268 B
- US 10800108 B
- US 10814558 B
- US 10828698 B
- US 10953609 B
- US 20160107379
- US 20200114422
- US 20200361155
- US 20200371509
- US 63138987